# EUROPÄISCHE PATENTSCHRIFT

(11) **EP 0 456 598 B1**
(45) Veröffentlichungstag und Bekanntmachung des Hinweises auf die Patenterteilung: **19.05.1993**
(21) Anmeldenummer: 91810149.4
(22) Anmeldetag: 06.03.1991
(51) Int. Cl.: B23Q 11/00

(54) **Absaugvorrichtung für handgeführte Bohr- und Meisselgeräte**
Suction device for a rotary or percussion hand drill
Dispositif d'aspiration pour une perceuse à rotation ou à percussion

(30) Priorität: 07.05.1990 DE 4014571
(43) Veröffentlichungstag der Anmeldung: 13.11.1991
(73) Patentinhaber: HILTI Aktiengesellschaft, 9494 Schaan (LI)
(72) Erfinder: Keusch, Siegfried, c/o Fa. Keusch, W-7301 Deizisau (DE); Müller-Boysen, Ulrich, c/o Fa. Keusch, W-7301 Deizisau (DE); Spieth, Manfred, W-8033 Martingsried (DE)
(74) Vertreter: Wildi, Roland

(56) Entgegenhaltungen:
- EP-A- 0 048 331
- EP-A- 0 347 631
- CH-A- 96 905
- DE-C- 679 585
- GB-A- 214 115
- US-A- 2 944 465

## Beschreibung

Die Erfindung betrifft eine Absaugvorrichtung für handgeführte Bohr- und Meisselgeräte mit einem Saugkopf und einem Gestänge zur verschiebbaren Halterung am Gerät, wobei der Saugkopf derart topfförmig ausgebildet ist, dass die Oeffnung in Bearbeitungsrichtung weist und der zumindest entlang eines Teiles seines Umfanges von einer Wandung umgebene Boden der Bearbeitungsrichtung abgewandt ist und im Boden eine Absaugoeffnung für eine Fremdabsaugung sowie eine Durchtrittsöffnung für ein im Gerät eingesetztes Werkzeug vorgesehen ist.

Absaugvorrichtungen für handgeführte Bohr- und Meisselgeräte, die eine Absaugöffnung für eine Fremdabsaugung, beispielsweise in Form eines Industriestaubsaugers aufweisen, sind in erheblichem Masse verbreitet. Zumeist sind solche Absaugvorrichtungen über ein Gestänge mit dem Gerät verschiebbar verbunden, wobei oft eine mit dem Gestänge zusammenwirkende Stellmutter vorgesehen ist, so dass solchen Absaugvorrichtungen auch die Funktion eines Tiefenanschlages zukommt. Darüber hinaus ist bei den zumeist entgegen der Bearbeitungsrichtung federnd gelagerten Absaugvorrichtungen eine weitere mit dem Gestänge zusammenwirkende Stellmutter vorgesehen, so dass eine Anpassung an die jeweils zur Verwendung gelangenden Werkzeuge erfolgen kann.

Nachteilig bei all diesen bekannten Absaugvorrichtungen, zu welchen auch die aus der DE-AS 24 36 023 gehört, ist der Umstand, dass sich in den Saugköpfen Staub derart ablagert, dass die Absaugwirkung nicht mehr vollkommen zum Tragen kommt. Schuld an diesen Ablagerungen ist zumeist die strömungsungünstige Auslegung der Saugköpfe, da diese in ihrer Form einerseits an die Geräte, wo die Absaugvorrichtungen vorgesehen sind, angepasst werden müssen und andererseits durch die Formgebung der Saugköpfe die Zugänglichkeit, beispielsweise in Ecken, nicht allzusehr behindert werden darf. Zudem ist, ebenfalls aus strömungstechnischer Sicht, die Abstimmung der Durchtrittsöffnung auf das zur Verwendung gelangende Werkzeug nicht einfach, da zum einen genügend Freiraum für das Ansaugen von Luft vorhanden sein muss und zum anderen das Spiel zwischen Durchtrittsöffnung und Werkzeug nicht so gross gewählt werden darf, dass Staub an dieser Stelle entweicht.

Mit der Problematik der strömungstechnischen Auslegung befasst sich die EP-A 347 631, welche sich aber auf ein Gerät anderer Gattung, nämlich auf eine Stichsäge bezieht. Bei einer solchen Stichsäge ist die leichte Zugänglichkeit, beispielsweise in Ecken nicht vordergründig, so dass ein die gesamte Grundplatte der Stichsäge abdeckender Absaugschuh zur Verwendung kommt. Dieser Absaugschuh ist zum Bauteil hin, das zu bearbeiten ist geschlossen und weist entlang seinem geschlossenen Boden zwei Luftführkanäle auf. Diese beiden Luftführkanäle erstrecken sich von der Durchtrittsöffnung für das Sägeblatt bis zu einem Raum vor der Absaugöffnung, wo sie sich wieder vereinigen. Aufgrund dieser Vereinigung vor der Absaugöffnung werden nur bedingt strömungstechnische Vorteile erreicht, was an sich bei dem hier zur Diskussion stehenden Gerät ausreicht, da im Zusammenhang mit der Durchtrittsöffnung keine besonderen Anforderungen hinsichtlich unterschiedlicher Dimensionen der zum Einsatz gelangenden Werkzeuge gestellt werden.

Der Erfindung liegt die Aufgabe zugrunde, eine Absaugvorrichtung zu schaffen, welche strömungstechnisch derart ausgelegt ist, dass einerseits die volle Absaugleistung zur Verfügung steht und sich andererseits im Bohrkopf keine Ablagerungen von Staub bilden.

Erfindungsgemäss wird die Aufgabe dadurch gelöst, am Boden wenigstens ein im wesentlichen normal dazu angeordnetes, sich von der Absaugöffnung zur Durchtrittsöffnung erstreckendes Leitblech zur Unterteilung des vom Boden und der Wandung eingeschlossenen Raumes in wenigstens zwei, Absaugöffnung und Durchtrittsöffnung miteinander verbindende, Teilräume angeordnet ist, wobei die Höhe des Leitbleches im wesentlichen der Höhe der Wandung entspricht und die freien Enden von Wandung und Leitblech mit einer gummielastischen Dichtlippe versehen sind.

Aufgrund der erfindungsgemäss vorgesehenen Leitbleche bilden die entstehenden Teilräume voneinander getrennte Absaugkanäle, welche die Durchtrittsöffnung mit der Absaugöffnung verbinden. Der Umfang der Durchtrittsöffnung wird somit von diesen gesondert zur Verfügung stehenden Absaugkanälen abgedeckt. Es entstehen dadurch hohe Strömungsgeschwindigkeiten in diesen Absaugkanälen, was Wirbelbildungen und damit verbundene Ablagerungen von Staub verhindert. Zudem haben diese voneinander getrennten Absaugkanäle den Vorteil, dass bei der Blockierung eines Kanals durch irgendwelche grössere Teile die Absaugung insgesamt nicht behindert wird, da der oder die übrigen Kanäle mit der vollen Saugleistung noch zur Verfügung stehen.

Damit die Teilräume ihre Funktion als getrennt wirkende Absaugkanäle vollumfänglich erfüllen, entspricht die Höhe der Leitbleche im wesentlichen der Höhe der Wandung. Dadurch bilden sich nach Auflage des Saugkopfes auf dem zu bearbeitenden Gut vollumfänglich geschlossene, als Absaugkanäle wirkende Teilräume.

Zur Verbesserung der vorgenannten Wirkung, dh des Abschlusses der Teilräume gegenüber dem zu bearbeitenden Gut sind die freien Enden von Wandung und Leitblechen mit einer gummielastischen Dichtlippe versehen. Eine solche Dichtlippe kann durch Kleben, Klemmen oder dergleichen an den Wandungen und den Leitblechen aufgebracht sein. Zin entsprechender Ueberstand der freien Enden von Wandung und Leitblechen fördert die Elastizität dieser Dichtlippen. Im Falle eines Undichtwerdens durch Verschleiss oder dergleichen lassen sich die Dichtlippen austauschen, so dass der restliche Teil der Saugvorrichtung noch weiter verwendet werden kann.

Eine optimale Wirkung wird dann erzielt, wenn entlang dem gesamten Umfang der Durchtrittsöffnung dieselbe Saugleistung zur Verfügung steht. Zur Erfüllung dieser Voraussetzung sind vorteilhaft die Umfangsabschnitte der Durchtrittsöffnung zwischen einander jeweils benachbarter Leitbleche im wesentlichen gleich gross.

Insbesondere bei Verwendung einer Absaugvorrichtung in Verbindung mit Werkzeugen grösseren Durchmessers, beispielsweise Diamantbohrkronen, sind Durchtrittsöffnungen von grossem Durchmesser erforderlich. Dies führt dazu, dass der Saugkopf eine relativ grosse Fläche des zu bearbeitenden Gutes abzudecken hat. Um auch in diesem Falle optimale strömungstechnische Bedingungen zu schaffen, sind bei einem hierzu geeigneten Saugkopf vorzugsweise drei Leitbleche zur Bildung von drei Teilräumen vorgesehen.

Obwohl Absaugvorrichtungen der in Rede stehenden Art viele Vorteile bringen, werden sie oft nicht verwendet, weil dadurch die Sicht zur Bearbeitungsstelle behindert wird. Insbesondere kann der genaue Aufsetzpunkt des Werkzeuges nicht eingesehen werden. Um auch diesen Nachteil zu beheben, schliesst sich gemäss einer weiteren Ausführungsform der Erfindung an die Durchtrittsöffnung radial eine Boden und Wandung durchsetzende Aussparung mit im wesentlichen dem Durchmesser der Durchtrittsöffnung entsprechender Breite an. Eine solche, sowohl Boden als auch Wandung durchsetzende Aussparung gibt die Sicht auf die Werkzeugspitze frei. Allerdings ist gerade bei einer solchen Aussparung die strömungstechnische Auslegung des Saugkopfes von ausserordentlicher Bedeutung, so dass Staub nicht austreten kann. Die erfindungsgemäss vorgesehenen Leitbleche schaffen auch hier eine strömungstechnisch derartige Optimierung, dass die Saugleistung ohne Austritt von Staub vollumfänglich gewährleistet ist.

Die Aussparung trägt weiterhin wesentlich zur Vereinfachung der Handhabung beim Austausch der Werkzeuge bei. Aufgrund dieser Aussparung können die Werkzeuge seitlich durch die Aussparung hindurch bis zur Geräteachse zugeführt und anschliessend axial ins Gerät eingesetzt werden. Dies verkürzt ganz wesentlich den Weg und dadurch die Zeit für das Einsetzen und Entnehmen der Werkzeuge. Ein nachteiliges axiales Hindurchführen der gesamten Werkzeuge durch den Saugkopf, wie dies bei herkömmlichen Absaugvorrichtungen erforderlich ist, kann dadurch vermieden werden.

Die Erfindung soll nunmehr, anhand von sie beispielsweise wiedergebenden Zeichnungen, näher erläutert werden. Es zeigen:
- Fig. 1: eine beispielhaft an einem Bohrgerät montierte Absaugvorrichtung gemäss Erfindung;
- Fig. 2: eine Draufsicht entgegen der Bearbeitungsrichtung auf den Saugkopf der Absaugvorrichtung gemäss Fig. 1;
- Fig. 3: eine Seitenansicht des kopfseitigen Bereiches der Absaugvorrichtung gemäss Fig. 2;
- Fig. 4: eine Draufsicht entgegen der Bearbeitungsrichtung auf einen Saugkopf einer weiteren Absaugvorrichtung;
- Fig. 5: eine Seitenansicht des kopfseitigen Bereiches der Absaugvorrichtung gemäss Fig. 4.

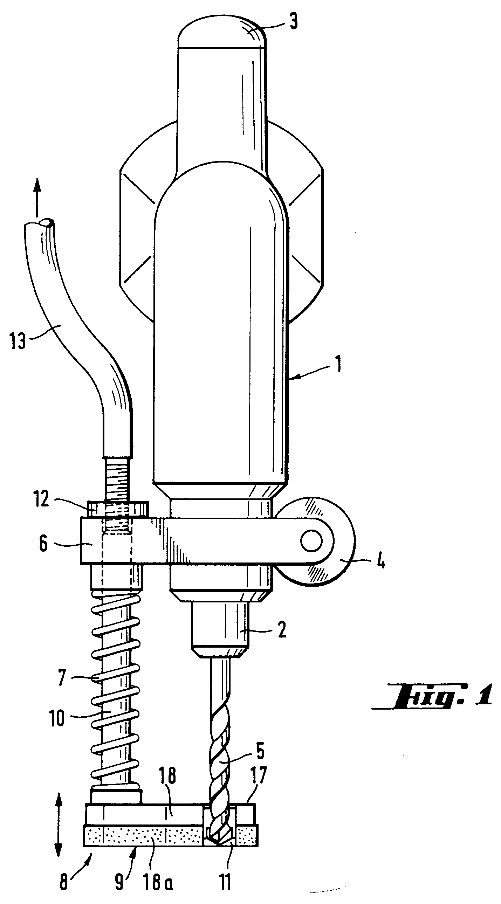

Fig. 1 zeigt eine Absaugvorrichtung 8 mit Saugkopf 9 und Gestänge 10, montiert an einem Bohrgerät 1. In einer Werkzeugaufnahme 2 des mit einem Handgriff 3 und einem Zusatzhandgriff 4 versehenen Bohrgerätes 1 ist ein Werkzeug 5 eingesetzt. Dieses Werkzeug 5 durchsetzt eine Aussparung 11 des Saugkopfes 9, so dass das Werkzeug 5 bis zu seiner Spitze hin sichtbar ist.

Montiert ist die Absaugvorrichtung 8 am Gerät 1 über eine vom Zusatzhandgriff 4 spannbare Schelle 6. Zwischen Schelle 6 und Saugkopf 9 ist eine das Gestänge 10 umgebende Feder 7 vorgesehen, gegen welche die Absaugvorrichtung 8 entgegen der Bearbeitungsrichtung verschiebbar ist. Der Anpassung der Absaugörrichtung 8 an die Länge des eingesetzten Werkzeuges 5 dient eine mit dem Gestänge 10 zusammenwirkende Stellmutter 12.

Das Gestänge 10 dient im vorliegenden Beispiel der Verbindung des Saugkopfes 9 mit einem Schlauch 13 der zeichnerisch nicht dargestellten Fremdabsaugung.

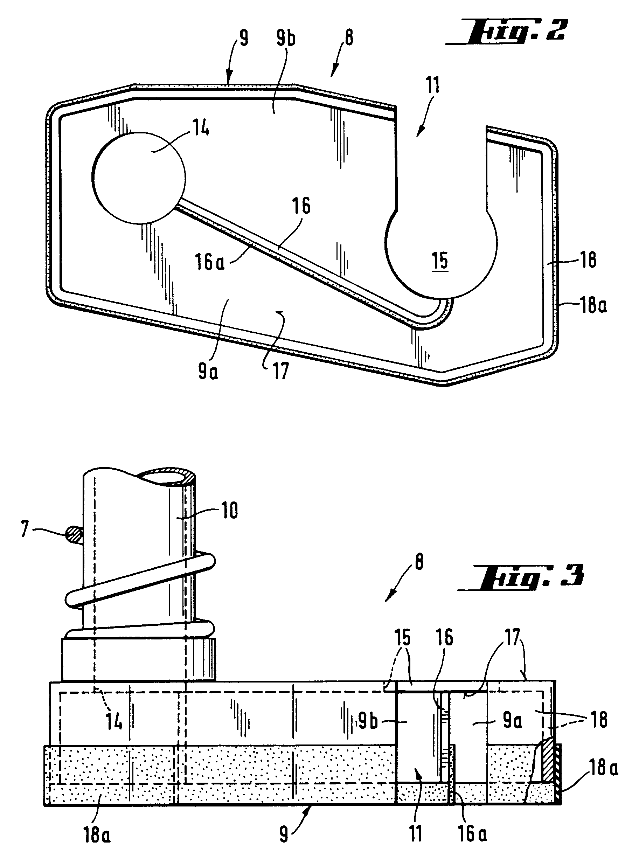

Aus der Draufsicht entgegen der Bearbeitungsrichtung auf den Saugkopf 9 der Absaugeinrichtung 8 entsprechend Fig. 2 ist die Absaugöffnung 14 und die Durchtrittsöffnung 15 zu erkennen. Zwischen Absaugöffnung 14 und Durchtrittsöffnung 15 ist ein Leitblech 16 angeordnet, welches zwei Teilräume 9a, 9b schafft. Die Fig. 2 zeigt ferner, wie sich radial an die Durchtrittsöffnung 15 die Boden 17 und Wandung 18 durchsetzende Aussparung 11 anschliesst.

Aus Fig. 3 ist ersichtlich, wie die Wandung 18 mit Dichtlippen 18a und das Leitblech 16 mit Dichtlippen 16a versehen sind. Zudem zeigt diese Figur das die Verbindung von der Absaugöffnung 14 zur Fremdabsaugung herstellende Gestänge 10 in Form eines Rohres.

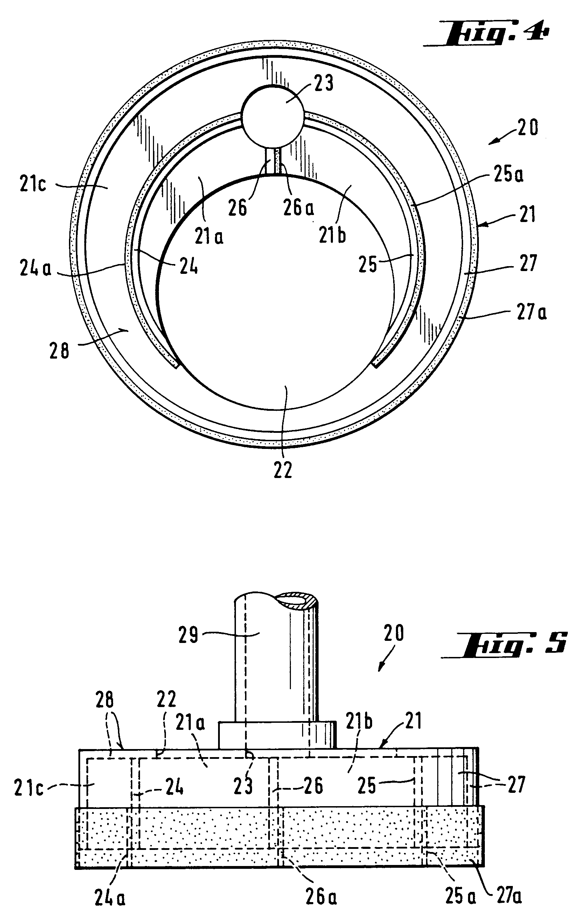

Die im Saugkopf 21 abweichende Absaugvorrichtung 20 entsprechend den Fig. 4 und 5 ist vor allem für Bohrwerkzeuge grösseren Durchmessers, beispielsweise Diamantbohrkronen, geeignet. Zu diesem Zwecke weist der Saugkopf 21 wiederum eine Durchtrittsöffnung 22 und eine Absaugöffnung 23 auf. Die Durchtrittsöffnung 22 übersteigt in diesem Falle die Absaugöffnung 23 um ein Mehrfaches.

Zwischen Absaugöffnung 23 und Durchtrittsöffnung 22 sind drei Leitbleche 24, 25, 26 vorgesehen, welche drei Teilräume 21a, 21b, 21c schaffen. Begrenzt werden diese Teilräume von der Wandung 27 und dem Boden 28. Dichtlippen 24a, 25a, 26a an den Leitblechen 24, 25, 26 stellen in Verbindung mit Dichtlippen 27a der Wandung 27 die Abdichtung zu dem zu bearbeitenden Gut sicher. Zur Verbindung der Absaugöffnung 23 mit der Fremdabsaugung dient wiederum ein als Rohr ausgebildetes Gestänge 29.

## Patentansprüche

1. Absaugvorrichtung (8, 20) für handgeführte Bohr- und Meisselgeräte (1) mit einem Saugkopf (9, 21) und einem Gestänge (10, 29) zur verschiebbaren Halterung am Gerät (1), wobei der Saugkopf (9, 21) derart topfförmig ausgebildet ist, dass die Oeffnung in Bearbeitungsrichtung weist und der zumindest entlang eines Teiles seines Umfanges von einer Wandung (18, 27) umgebene Boden (17, 28) der Bearbeitungsrichtung abgewandt ist und im Boden (17, 28) eine Absaugöffnung (14, 23) für eine Fremdabsaugung sowie eine Durchtrittsöffnung (15, 22) für ein im Gerät (1) eingesetztes Werkzeug (5) vorgesehen ist, **dadurch gekennzeichnet,** dass am Boden (17, 28) wenigstens ein im wesentlichen normal dazu angeordnetes, sich von der Absaugöffnung (14, 23) zur Durchtrittsöffnung (5, 22) erstreckendes Leitblech (16, 24, 25, 26) zur Unterteilung des vom Boden (17, 28) und der Wandung (18, 27) eingeschlossenen Raumes in wenigstens zwei, Absaugöffnung (14, 23) und Durchtrittsöffnung (15, 22) miteinander verbindende, Teilräume (9a, 9b, 21a, 21b, 21c) angeordnet ist, wobei die Höhe des Leitbleches (16, 24, 25, 26) im wesentlichen der Höhe der Wandung (18, 27) entspricht und die freien Enden von Wandung (18, 27) und Leitblech (16, 24, 25, 26) mit einer gummielastischen Dichtlippe (18a, 27a, 16a, 24a, 25a, 26a) versehen sind.

2. Vorrichtung nach Anspruch 1, dadurch gekennzeichnet, dass die Umfangsabschnitte der Durchtrittsöffnung (15, 22) zwischen einander jeweils benachbarter Leitbleche (16, 24, 25, 26) im wesentlichen gleich gross sind.

3. Vorrichtung nach Anspruch 1 oder 2, dadurch gekennzeichnet, dass drei Leitbleche (24, 25, 26) zur Bildung von drei Teilräumen (21a, 21b, 21c) vorgesehen sind.

4. Vorrichtung nach einem der Ansprüche 1 bis 3, dadurch gekennzeichnet, dass sich an die Durchtrittsöffnung (15) radial eine Boden (17) und Wandung (18) durchsetzende Aussparung (11) mit im wesentlichen dem Durchmesser der Durchtrittsöffnung (15) entsprechender Breite anschliesst.

## Claims

1. Suction device (8, 20̸) for hand operated drills and chisels (1) comprising a suction head (9, 21) and a tubing (10̸, 29) for displaceable support on the tool (1), in which respect the suction head (9, 21) is shaped troughlike in such a manner that the opening is oriented towards the working direction and that the bottom (17, 28), which is a least in a portion of its periphery surrounded by a wall (18, 27), is oriented away from the working direction and that a suction opening (14, 23) for external suctioning- off and a passage (15, 22) for a tool (5), which is inserted into the apparatus (1), is provided in the bottom. **characterized in that** at the bottom (17, 28) is arranged at least one guide plate (16, 24, 25, 26), which is arranged substantially normally thereto and which extends from the suction opening (14, 23) to the passage (5, 22), for dividing the space which is enclosed by the bottom (17, 28) and the wall (18, 27) into at least two sectional areas (9a, 9b, 21a, 21b, 21c) which interconnect suction opening (14, 23) and passage (15, 22), in which respect the height of the guide sheet (16, 24, 25, 26) corresponds substantially with the height of the wall (18, 27), and the free ends of the wall (18, 27) and the guide sheet (16, 24, 25, 26) are provided with a rubber elastic sealing lip (18a, 27a, 16a, 24a, 25a, 26a).

2. Device according to claim 1, **characterised in that** the peripheral sections of the passage (15, 22) between adjacent guide sheets (16, 24, 25, 26) are substantially of the same size.

3. Device according to claim 1 or 2, **characterised in that** three guide sheets (24, 25, 26) are provided to establish three sectinal areas (21a, 21b, 21c).

4. Device according to one of claims 1 to 3, **characterised in that** radially adjacent to the passage (15) is a cut-out (11), which passes through bottom (17) and wall (18) and the width of which corresponds substantially with the diameter of the passage (15).

## Revendications

1. Dispositif d'aspiration (8, 20) pour des perceuses à rotation et à percussion (1), comprenant une tête d'aspiration (9, 21) et une tige (10, 29) pour la fixation mobile sur l'appareil (1), la tête d'aspiration (9, 21) étant conformée en pot de telle façon que l'ouverture est orientée dans la direction de travail, que le fond (17, 28) entouré au moins le long d'une partie de sa périphérie par une paroi (18, 27) est opposé à la direction de travail, et que dans le fond (17, 28) est prévue une ouverture d'aspiration (14, 23) pour une aspiration séparée ainsi qu'une ouverture de passage (15, 22) pour un outil (5) monté sur l'appareil (1), **caractérisé en ce** que sur le fond (17, 28) est prévu au moins un déflecteur (16, 24, 25, 26) disposé sensiblement verticalement par rapport à celui-ci et s'étendant de l'ouverture d'aspiration (14, 23) vers l'ouverture de passage (5, 22), pour subdiviser l'espace enfermé par le fond (17, 28) et la paroi (18, 27) en au moins deux espaces partiels (9a, 9b, 21a, 21b, 21c) qui relient entre elles l'ouverture d'aspiration (14, 23) et l'ouverture de passage (15, 22), la hauteur du déflecteur (16, 24, 25, 26) correspondant sensiblement à la hauteur de la paroi (18, 27) et les extrémités libres de la paroi (18, 27) et du déflecteur (16, 24, 25, 26) étant munies d'une lèvre d'étanchéité caoutchouteuse (18a, 27a, 16a, 24a, 25a, 26a).

2. Dispositif selon la revendication 1, caractérisé en ce que les sections périphériques de l'ouverture de passage (15, 22) entre des déflecteurs respectivement voisins (16, 24, 25, 26) présentent sensiblement la même grandeur.

3. Dispositif selon l'une des revendications 1 ou 2, caractérisé en ce qu'il comprend trois déflecteurs (24, 25, 26) pour la formation de trois espaces partiels (21a, 21b, 21c).

4. Dispositif selon l'une des revendications 1 à 3, caractérisé en ce qu'à l'ouverture de passage (15) est raccordé dans le sens radial un évidemment (11) qui traverse le fond (17) et la paroi (18) et dont la largeur correspond sensiblement au diamètre de l'ouverture de passage (15).
